Europäisches Patentamt

European Patent Office

Office européen des brevets

(19)

(11) Publication number: **0 175 829**

**B1**

(12) EUROPEAN PATENT SPECIFICATION

(45) Date of publication of patent specification: **06.07.88**

(51) Int. Cl.⁴: **B 60 C 11/04**

(21) Application number: **84630122.4**

(22) Date of filing: **28.08.84**

(54) Pneumatic tires.

(43) Date of publication of application:
**02.04.86 Bulletin 86/14**

(45) Publication of the grant of the patent:
**06.07.88 Bulletin 88/27**

(84) Designated Contracting States:
**DE**

(56) References cited:
FR-A-1 009 605
FR-A-2 227 965
GB-A-1 237 616
GB-A-1 524 364
GB-A-2 014 091
US-A-3 286 756

GUMMIBEREIFUNG, vol. 47, no. 10, October
1971, page 24, Biehlefeld, DE; "Metzeler:
Bewährtes im Winterprogramm. "Metzeler M &
S 94"

GUMMIBEREIFUNG, Februar 1974, page 22,
Biehlefeld, DE;

(73) Proprietor: **THE GOODYEAR TIRE & RUBBER COMPANY**
**1144 East Market Street**
**Akron, Ohio 44316-0001 (US)**

(72) Inventor: **Graas, Maurice**
**41, rue d'Orchimont**
**L-2268 Luxembourg (LU)**

(74) Representative: **Weyland, Joseph Jean Pierre**
**Goodyear Technical Center Luxembourg Patent**
**Department Avenue Gordon Smith**
**L-7750 Colmar-Berg (LU)**

Courier Press, Leamington Spa, England.

## Description

### Background of invention

This invention relates to pneumatic tires for passenger cars of the type described in the preamble to claim 1. GB—A—1 237 616, for example, describes such tires.

High performance tires typically have ground contacting tread portions divided into a plurality of circumferentially spaced lands or ribs by circumferentially continuous straight grooves. These lands may be further divided into circumferentially spaced blocks.

A problem associated with high speed tires is that the mid-circumferential portion of the tread portion sometimes wears more rapidly than the remainder of the tread portion.

Also, in some areas of the world there are grooved road surfaces, that is road surfaces with grooves extending along the length of the road. These grooves are typically between 2—2.5 cm apart. One area where such road surfaces are common is in California. When vehicles mounted on rib type tires are driven on such road surfaces there may be some interaction between the tire and the grooved road surface that produces a feeling of unease in the driver. This interaction is sometimes known as wander, and more particularly California wander.

The tire of the present invention attempts to overcome the above described problems through the means recited in the claims.

Preferably the width of the central rib on each side of the mid-circumferential plane is about 4%—10% of the tread width, and the lands on each side of said plane have widths that increase in steps as the lands are progressively located axially outwardly from the the mid-circumferential plane, such that each land is at least approximately one and one half times as wide as its axially inward adjacent land.

### Brief description of drawings

The invention will be described by way of example and with reference to the accompanying drawings in which:

Figure 1 is a perspective view of a tire according to the invention;

Figure 2 is a fragmentary enlarged plan view of the tire shown in Figure 1;

Figure 3 is a fragmentary enlarged plan view of a second tire also according to this invention; and

Figure 4 is a fragmentary enlarged plan view of a third tire also according to this invention.

### Detailed description of the invention

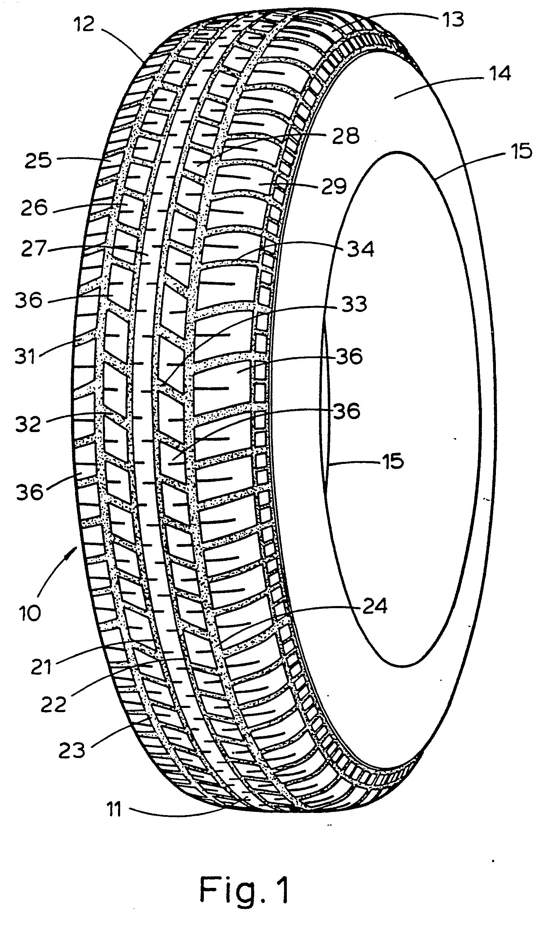

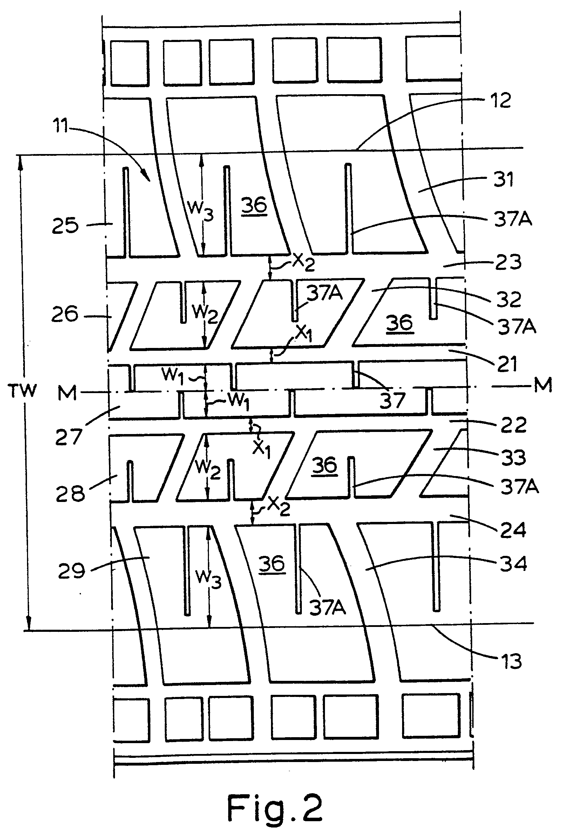

With reference to Figures 1 and 2 there is illustrated a pneumatic tire 10 for a passenger car, and which has a radial carcass construction. The tire 10 has a ground contacting tread portion 11 with a pair of lateral edges 12 and 13. The tread portion 11 is joined at its lateral edges 12 and 13 to a pair of sidewalls 14 that extend radially inwards from the tread portion each terminating in a bead portion 15.

The tire has a mid-circumferential plane M—M perpendicular to the rotational axis of the tire and located midway between the lateral edges 12 and 13 of the tread. The tread portion 11 has four straight grooves 21, 22, 23, and 24 extending circumferentially about the tread and which are symmetrically located, about the mid-circumferential plane M—M. The straight grooves 21, 22, 23, and 24 divide the tread portion into five axially spaced lands, 25, 26, 27, 28, and 29. A central land 27 is located at the mid-circumferential plane M—M and is in the form of a continuous rib, the other axially spaced lands 25, 26, 28, and 29 are each further divided into circumferentially spaced blocks 36 by lateral grooves 31, 32, 33, and 34, respectively. Alternatively, the lands 25, 26, 28, and 29 could be in the form of circumferentially continuous ribs.

The lateral grooves 31 and 32 to one side of the plane M—M are arranged so that the lateral grooves 32 adjacent the rib 27 extend diagonally across the tread portion 11 at an angle of between 55°—65° to the mid-circumferential plane M—M and the grooves 31 extend at an angle in the diagonally opposite direction so that the lateral grooves 31 and 32 form a series of substantially 'V' shaped configurations all pointed in one direction of rotation of the tire. Similarly, the lateral grooves 33 and 34 to the other side of the lateral plane M—M are arranged to form a series of substantially 'V' shaped configurations all pointed in the other direction of rotation of the tire. As illustrated in Figures 1 and 2 the pairs of lateral grooves 31 and 32, and 33 and 34, which form the substantially 'V' shaped configurations to each side of the plane M—M are not directly interconnected at the apex of the 'V' configuration but are circumferentially staggered by a pitch of approximately one half the circumferential length of a block 36. In alternative designs it is envisaged that the pairs of lateral grooves could be directly interconnected to form a true 'V' shaped configuration.

The tread portion 11 extends between the two lateral edges 12 and 13 and has a tread width TW. For the purposes of this invention the tread width TW is defined as the greatest axial distance across the tire measured from the footprint of the tire when the tire is mounted on a specified rim and is inflated to a design pressure at a rated load. The axial widths $W_1$, $W_2$ and $W_3$ of the lands 27, 28, and 29 respectively, to one side of the plane M—M are equal to the respective widths $W_1$, $W_2$, and $W_3$ of the lands 27, 26, and 25 to the other side of the plane M—M. On each side of the plane M—M the widths $W_1$, $W_2$, $W_3$ of the lands increase in stepwise progression axially outwardly from the plane M—M. For the purpose of the present invention the terms 'axial' and 'axially' refer to displacement along or parallel to the axis of rotation of the tire and the terms 'axially inner' and 'axially outer' refer to positions relative to the mid-circumferential plane M—M. In the present example of Figure 1 and Figure 2, the width $W_1$ of the rib 27 on each side of the plane M—M is approximately 6% of the tread width TW. $W_2$ is approximately equal to 2.4 $W_1$, and $W_3$ is equal to approximately 3.7 $W_1$, so that the lands progressively almost double in size axially outwardly from the plane M—M, and at least increase in width in steps by a factor of about one and one half.

The axial widths $X_1$ and $X_2$ of the circumferential grooves 22 and 24 on said one side of the plane M—M are equal to the respective widths $X_1$ and $X_2$ of the circumferential grooves 21 and 23 on said other side of the plane M—M. The widths $X_1$ and $X_2$ of the grooves also increase axially outwardly from the plane M—M. In the present example $X_2$ is approximately equal to 1.7 $X_1$.

Thus it can be seen that as the axial widths $W_1$, $W_2$, and $W_3$ of the lands increase axially outwardly, the axial widths $X_1$ and $X_2$ of the grooves also increase. The width $X_1$ or $X_2$ of any groove 21, 22, 23, and 24 is related to the width $W_1$ or $W_2$ of its adjacent axially inner land, such that the width of any land is between 150%—250% of the width of its adjacent outer groove. For example, in the present embodiment of Figure 1 and Figure 2, the width $W_1$ of the rib 27 is approximately 170% of the width $X_1$ of its adjacent groove 21 or 22, and the width $W_2$ of the lands 26 or 28 is 250% of the width $X_2$ of the adjacent outer grooves 23 or 24 respectively. In yet to the described embodiments further examples of this relationship will be described.

The overall tread pattern as described having the center rib 27 with the lands and grooves increasing in width radially outwardly gives a tire tread having a mid-circumferential portion at the rib 27 with high longitudinal stiffness properties and low lateral stiffness properties, (the longitudinal stiffness could be a factor of 15—20 times higher than the lateral stiffness). The stiffness of the tread is measured in the footprint of the tire under rated load conditions, and is a beam stiffness measure in the circumferential direction (longitudinal) or axial direction (lateral stiffness). The portions of the tread adjacent the edges 11 and 12 have a high lateral stiffness (a factor of 10—15 times higher than the lateral stiffness of the center portion) and a low longitudinal stiffness (1/4 to 1/2 the longitudinal stiffness of the center rib). These properties produce a tire tread which has both good cornering properties because of the high lateral stiffness of the tread edge, combined with good high speed straight running properties, because of the high longitudinal stiffness at the center.

The central rib 27 and the blocks 36 all have blades 37 therein for improving the traction of the tire blades, sometimes known as sipes, are narrow grooves that close in the footprint of a tire. The blades 37 all extend axially across the tread, and in the present arrangement the blades 37A in the blocks 36 open into the respective adjacent wide circumferential groove 23 or 24.

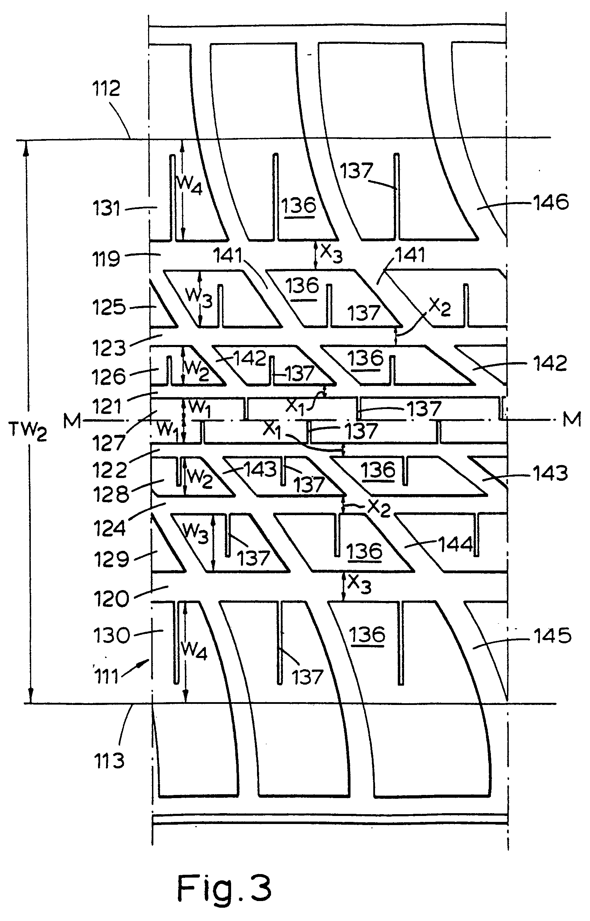

Now with reference to Figure 3, there is illustrated a fragmentary enlarged plan view of a tread portion of a tire constituting a second embodiment of the present invention. The tire tread portion 111 has a pair of lateral edges 112 and 113 separated by a tread width $TW_2$. The tread portion 111 has six circumferential straight grooves 119, 120, 121, 122, 123, and 124 that divide the tread portion into seven axially spaced lands 125, 126, 127, 128, 129, 130, and 131. The central land 127 is in the form of a continuous rib located at the mid-circumferential plane M—M of the tire, and the other axially spaced lands 125, 126, 128, 129, 130 and 131 are further divided into circumferentially spaced blocks 136 by lateral grooves 141, 142, 143, 144, 145, and 146 respectively. The block 136 and central rib 127 are provided with blades 137.

In this embodiment, the lateral grooves 146, 141 and 142 on one side of the plane M—M are arranged to form continuous lateral grooves in the form of curves and which extend from the center rib 27 axially outwardly to the tread edge 112 in one circumferential direction of the tire, and the lateral grooves 143, 144 and 145 on the other side of the plane M—M make similar continuous lateral grooves to the other edge 113 in the opposite circumferential direction of the tire.

As for the embodiment described with reference to Figure 1 and Figure 2 the axial widths $W_1$, $W_2$, $W_3$ and $W_4$ of the lands 125, 126, 127, 128, 129, 130, and 131 on each side of the plane M—M increase in stepwise progression axially outwardly. The width $W_1$ of rib 127 is approximately 4% of the treadwidth $TW_2$. In this example, $W_4$ is approximately equal to 4.5 $W_1$, $W_3$ is approximately equal to 2.5 $W_1$, and $W_2$ is approximately equal to 1.7 $W_1$.

As before, the axial widths $X_1$, $X_2$, and $X_3$ of the circumferential grooves 119, 120, 121, 122, 123, and 124 also increase axially outwardly from the plane M—M. In the present example $X_3$ is approximately equal to 2.2 $X_1$ and $X_2$ is approximately equal to 1.4 $X_1$.

Thus it can be seen that as the axial widths $W_1$, $W_2$, $W_3$, and $W_4$ or the lands increase, the axial widths $X_1$, $X_2$, and $X_3$ of the grooves also increase so that the width of any land to one side of the plane M—M is about twice the width of its adjacent outer groove. In the present example the width $W_1$ of the rib 127 is approximately 175% of the width of $X_1$ of the grooves 121, and 122, the width $W_2$ of the lands 126 and 128 is approximately 220% of the width $X_2$ of grooves 123 and 124, and the width $W_3$ of the lands 125 and 129 is approximately 200% of the width $X_3$ of the grooves 119, and 120. Thus as previously described with reference to the previous embodiment the width 'W' of the any land is approximately twice the width X of its adjacent outer groove.

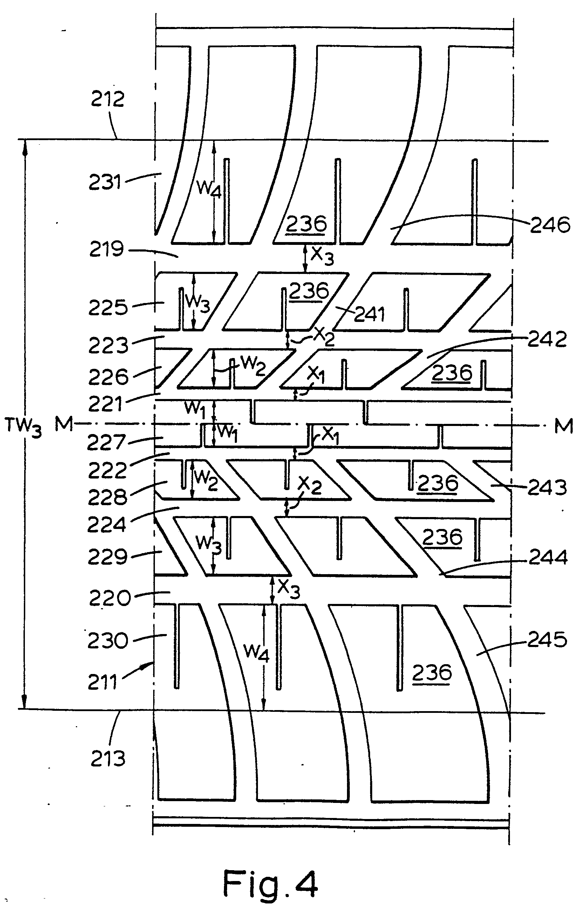

With reference to Figure 4, the tread portion 211 illustrated is very similar to the tread illustrated in Figure 3. The tread portion 211 has a pair of lateral edges 212 and 213 separated by a tread width $TW_3$. The tread has six grooves 219, 220, 221, 222, 223, and 224 dividing the tread up into seven axially spaced lands 225, 226, 227, 228, 229, 230, and 231. The central land 227 is in the form of a continuous rib and the other lands 225, 226, 228, 229, 230, and 231 are further subdivided into circumferentially spaced blocks 236 by lateral grooves 241, 242, 243, 244, 245 and 246 respectively.

The relationship between the widths $W_1$, $W_2$, $W_3$ and $W_4$ of the axially spaced lands and the widths $X_1$, $X_2$, and $X_3$ of the grooves is as described above with reference to Figure 3. The major difference between this embodiment of the invention, and that illustrated in Figure 3 is that the tire is made directional. That is the tire is intended to be fitted to a vehicle so that the tread portion operates in a different manner in one direction of rotation than in the other. This is achieved by the lateral grooves 246, 241, and 242, on one side of the plane M—M forming a groove extending from the center rib 227 axially outwardly to the tread edge 212 in one circumferential direction of rotation, and the lateral groove 143, 144, and 145 on the other side of the plane M—M making a continuous groove extending axially outwardly to the other tread edge 213 and also in said one circumferential direction. Whilst the lateral grooves illustrated in Figure 4 are arcuate, in alternative designs they could be straight.

While certain representative embodiments and details have been shown for the purpose of illustrating the invention it will be apparent to those skilled in the art that various changes and modifications could be made therein. For example, the blades could be altered in number and form, and various aspects of the illustrated tread portions could be mixed together in a different manner, such as the tread portion in Figure 3 having only four straight circumferential grooves instead of six grooves, or alternatively the tread portion of Figure 2 having six straight circumferential grooves instead of four.

**Claims**

1. A pneumatic tire (10) having a ground contacting tread portion (11, 111, 211) with a pair of lateral edges (12, 13; 112, 113; 212, 213) and having at least four grooves (21—24; 119—124; 219—224) extending circumferentially about the tread portion dividing the tread portion into axially spaced lands (25—29; 125—131; 225—231), one of said lands being in the form of a continuous central rib (27, 127, 227) that includes the mid-circumferential plane (M—M) of the tire, and is symmetrically located about said plane (M—M), the axial widths ($W_1$—$W_n$) of said lands on each side of said plane (M—M) increasing in stepwise progression axially outwardly, and the axial widths ($X_1$—$X_n$) of said circumferential grooves also increasing in width in stepwise progression axially outwardly from said plane (M—M), characterized in that the said circumferentially extending grooves are straight grooves and in that the axial width of any land on each side of said plane (M—M) is between 150% and 250% of the width of its adjacent outer groove.

2. A tire as claimed in claim 1 characterized by the width ($W_1$) of the central rib (27, 127, 227) on each side of the mid-circumferential plane (M—M) being about 4%—10% of the tread width ($TW_1$, $TW_2$, $TW_3$) and the lands on each side of the plane have widths that increase in steps as the lands are progressively located axially outwardly from said plane (M—M), such that each outer land is at least approximately one and one half times as wide as its axially inward adjacent land.

3. A tire as claimed in claim 1 or claim 2 characterized by the lands, other than said central rib (27, 127, 227) being divided into circumferentially spaced blocks (31, 136, 236) by laterally extending grooves (31—34; 141—146; 241—246).

4. A tire as claimed in claim 3 characterized by the lateral grooves (31, 32; 33, 34) on each side of the central rib (27) forming a series of substantially 'V' shaped configurations.

5. A tire as claimed in claim 4 characterized by the 'V' shaped configurations on each side of the central rib (27) being arranged with the apex of the 'V's pointing in opposite rotational directions.

6. A tire as claimed in claim 3 characterized by the lateral grooves in adjacent lands on each side of the central rib (127, 227) forming continuous lateral grooves (141—146; 241—246) extending from the central rib (127, 227) to the lateral edge (112, 113; 212, 213) of the tread portion (111, 211).

7. A tire as claimed in claim 6 characterized by the continuous lateral grooves (141—146; 241—246) on each side of the central rib (127, 227) extending in the same circumferential direction.

8. A tire as claimed in claim 6 or claim 7 characterized by the continuous lateral grooves (141—146; 241—246) being in the form of a curve.

9. A tire as claimed in claim 2 or 3 characterized by there being four circumferential grooves (21—24) and the axial width ($W_1$) of the central rib (27) on each side of the mid-circumferential plane (M—M) is about 6% of the tread width (TW) and the axial widths ($X_1$, $X_2$) of the circumferential grooves (21—24) also increases in stepwise progression with the axially outwards location of the grooves from the mid-circumferential plane also in steps of at least one and one half times the width ($X_1$) of the adjacent inner groove (21, 22).

10. A tire as claimed in claim 2 or 3 characterized by there being six circumferential grooves (119—124; 219—224) and the axial width ($W_1$) of the central rib (127, 227) on each side of the mid-circumferential plane (M—M) is 4% of the tread width ($TW_1$, $TW_2$) and the axial widths ($X_1$—$X_3$) of the circumferential grooves also increases in stepwise progression with the axially outwards location of the grooves from the mid-circumferential plane, said step being at least 140% of the width of the adjacent inner groove.

**Patentansprüche**

1. Luftreifen (10) mit einem den Boden berührenden Lauffflächenabschnitt (11, 111, 211) mit einem Paar von Seitenrändern (12, 13; 112, 113; 212, 213) und mit wenigstens vier Rillen (21—24;

119—124; 219—224), die sich in Umfangsrichtung um den Laufflächenabschnitt erstrecken und den Laufflächenabschnitt in axial beabstandete Felder (25—29; 125:131; 225—231) aufteilen, wobei eines der Felder in Form einer zusammenhängenden zentralen Rippe (27, 127, 227) ausgebildet ist, die die mittlere Umfangsebene (Äquatorialebene) (M—M) des Reifens umfaßt und symmetrisch zu der Ebene (M—M) angeordnet ist, wobei die axial Breite ($W_1$—$W_n$) der Felder auf jeder Seite der Ebene (M—M) in stufenweiser Staffelung axial nach außen hin zunimmt und wobei die axialen Breiten ($X_1$—$X_n$) der sich in Umfangsrichtung erstreckenden Rillen ebenfalls axial nach außen von der Ebene (M—M) aus in stufenweiser Staffelung zunehmen, dadurch gekennzeichnet, daß die sich in Umfangsrichtung erstreckenden Rillen geradlinige Rillen sind und daß die axiale Breite jedes Feldes auf jeder Seite der Ebene (M—M) zwischen 150% und 250% der Breite seiner außen angrenzenden Rille beträgt.

2. Reifen nach Anspruch 1, dadurch gekennzeichnet, daß die Breite ($W_1$) der zentralen Rippe (27, 127, 227) auf jeder Seite der mittleren Umfangsebene (M—M) etwa 4% bis 10% der Laufflächenbreite ($TW_1$, $TW_2$, $TW_3$) beträgt, und daß die Felder auf jeder Seite der Ebene Breiten aufweisen, die stufenweise zunehmen mit der Anordnung der Felder zunehmend axial nach außen von der Ebene (M—M) derart, daß jedes äußeres Feld wenigstens etwa 1-1/2 Mal so breit ist wie das axial innen benachbarte Feld.

3. Reifen nach Anspruch 1 oder 2, dadurch gekennzeichnet, daß die Felder anders als die zentrale Rippe (27, 127, 227) über sich seitlich erstreckende Rillen (31—34; 141—146; 241—246) in in Umfangsrichtung beabstandete Blöcke oder Stollen (31, 136, 236) unterteilt sind.

4. Reifen nach Anspruch 3, dadurch gekennzeichnet, daß die seitlichen Rillen (31, 32; 33, 34) auf jeder Seite der zentralen Rippe (27) eine Reihe von im wesentlichen V-förmigen Konfigurationen bilden.

5. Reifen nach Anspruch 4, dadurch gekennzeichnet, daß die V-förmigen Konfigurationen auf jeder Seite der zentralen Rippe (27) derart angeordnet sind, daß die Spitze der "V"s in entgegengesetzte Drehrichtungen zeigen.

6. Reifen nach Anspruch 3, dadurch gekennzeichnet, daß die seitlichen Rillen in benachbarten Feldern auf jeder Seite der zentralen Rippe (127, 227) zusammenhängende seitliche Rillen (141—146; 241—246) bilden, die sich von der zentralen Rippe (127, 227) zu dem Seitenrand (112, 113; 212, 213) des Laufflächenabschnitts (111, 211) erstrecken.

7. Reifen nach Anspruch 6, dadurch gekennzeichnet, daß sich die zusammenhängenden seitlichen Rillen (141—146; 241—246) auf jeder Seite der zentralen Rippe (127, 227) in derselben Umfangsrichtung erstrecken.

8. Reifen nach Anspruch 6 oder 7, dadurch gekennzeichnet, daß die zusammenhängenden seitlichen Rillen (141—146; 241—246) in Form eines Bogens ausgebildet sind.

9. Reifen nach Anspruch 2 oder 3, dadurch gekennzeichnet, daß vier Umfangsrillen (21—24) vorgesehen sind, daß die axiale Breite ($W_1$) der zentralen Rippe (27) auf jeder Seite der mittleren Umfangsebene (M—M) etwa 6% der Laufflächenbreite (TW) beträgt, und daß die axialen Breiten ($X_1$, $X_2$) der Umfangsrillen (21—24) ebenfalls in stufenweiser Staffelung zunehmen mit der Anordnung der Rillen in Richtung axial nach außen von der mittleren Umfangsebene in Schritten von wenigstens 1-1/2 mal der Breite ($X_1$) der inneren benachbarten Rille (21, 22).

10. Reifen nach Anspruch 2 oder 3, dadurch gekennzeichnet, daß sechs Umfangsrillen (119—124; 219—224) vorgesehen sind, daß die axiale Breite ($W_1$) der zentralen Rippe (127, 227) auf jeder Seite der mittleren Umfangsebene (M—M) 4% der Laufflächenbreite ($TW_1$, $TW_2$) beträgt, daß die axialen Breiten ($X_1$—$X_3$) der Umfangsrillen ebenfalls in schrittweiser Staffelung zunehmen mit der Anordnung der Rillen in Richtung axial nach außen von der mittleren Umfangsebene, und daß der Schritt wenigstens 140% der Breite der inneren benachbarten Rille beträgt.

**Revendications**

1. Bandage pneumatique (10) comportant une partie de bande de roulement entrant en contact avec le sol (11, 111, 211) pour vue de deux bords latéraux (12, 13; 112, 113; 212, 213) et comportant au moins quatre rainures (21—24; 119—124; 219—224) s'étendant sur la circonférence de la partie de bande de roulement en divisant celle-ci en plats espacés axialement (25—29; 125—131; 225—231), un de ces plats étant sous forme d'une nervure centrale continue (27, 127, 227) englobant le plan circonférentiel médian (M—M) du bandage pneumatique et située symétriquement autour de ce plan (M—M), les largeurs axiales ($W_1$—$W_n$) de ces plats de chaque côté de ce plan (M—M) augmentant progressivement axialement vers l'extérieur, tandis que les largeurs axiales ($X_1$—$X_n$ de ces rainures circonférentielles augmentent également progressivement axialement vers l'extérieur à partir de ce plan (M—M), caractérisé en ce que les rainures s'étendant dans le sens circonférentiel sont des rainures rectilignes, tandis que la largeur axiale de n'importe quel plat situé de chaque côté de ce plan (M—M) se situe entre 150% et 250% de la largeur de sa rainure extérieure adjacente.

2. Bandage pneumatique selon la revendication 1, caractérisé en ce que la largeur ($W_1$) de la nervure centrale (27, 127, 227) de chaque côté du plan circonférentiel médian (M—M) représente environ 4—10% de la largeur de bande de roulement ($TW_1$, $TW_2$, $TW_3$) tandis que les plats situés de chaque côté de ce plan ont des largeurs augmentant progressivement à mesure qu'ils sont situés progressivement axialement vers l'extérieur de ce plan (M—M), tant et si bein que chaque plat extérieur est au moins à peu près 1,5 fois plus large que le plat intérieur axial qui lui est adjacent.

3. Bandage pneumatique selon la revendication 1 ou 2, caractérisé en ce que les plats autres que la nervure centrale (27, 127, 227) sont divisés en blocs espacés circonférentiellement (31, 136, 236) par des rainures s'étendant latéralement (31—34; 141—146; 241—246).

4. Bandage pneumatique selon la revendication 3, caractérisé en ce que les rainures latérales (31, 32; 33, 34) situées de chaque côté de la nervure centrale (27) forment une série de configurations pratiquement en "V".

5. Bandage pneumatique selon la revendication 4, caractérisé en ce que les configurations en "V" situées de chaque côté de la nervure centrale (27) sont disposées de telle sorte que le sommet du "V" soit pointé dans des sens de rotation opposés.

6. Bandage pneumatique selon la revendication 3, caractérisé en ce que les rainures latérales pratiquées dans des plats adjacents de chaque côté de la nervure centrale (127, 227) forment des rainures latérales continues (141—146; 241—246) s'étendant de la nervure centrale (127, 227) jusqu'au bord latéral (112, 113; 212, 213) de la partie de bande de roulement (111, 211).

7. Bandage pneumatique selon la revendication 6, caractérisé en ce que les rainures latérales continues (141—146; 241—246) situées de chaque côté de la nervure centrale (127, 227) s'étendent dans la même direction circonférentielle.

8. Bandage pneumatique selon la revendication 6 ou 7, caractérisé en ce que les rainures latérales continues (141—146; 241—246) décrivent une courbe.

9. Bandage pneumatique selon la revendication 2 ou 3, caractérisé en ce qu'on prévoit quatre rainures circonférentielles (21—24), tandis que la largeur axiale ($W_1$) de la nervure centrale (27) de chaque côté du plan circonférentiel médian (M—M) représente environ 6% de la largeur de bande de roulement (TW), les largeurs axiales ($X_1$, $X_2$) des rainures circonférentielles (21—24) augmentant également progressivement à mesure qu'elles s'éloignent axialement vers l'extérieur à l'écart du plan circonférentiel médian par échelons représentant au moins 1,5 fois la largeur ($X_1$) de la rainure intérieure adjacente (21, 22).

10. Bandage pneumatique selon la revendication 2 ou 3, caractérisé en ce qu'on prévoit six rainures circonférentielles (119—124; 219—224), tandis que la largeur axiale ($W_1$) de la nervure centrale (127, 227) de chaque côté du plan circonférentiel médian (M—M) représente 4% de la largeur de bande de roulement ($TW_1$, $TW_2$), les largeurs axiales ($X_1$—$X_3$) des rainures circonférentielles augmentant également progressivement à mesure qu'elles s'éloignent axialement vers l'extérieur à l'écart de ce plan circonférentiel médian, ces échelons représentant au moins 140% de la largeur de la rainure intérieure adjacente.

Fig. 1

Fig.2

Fig.3

Fig.4